(19) **Europäisches Patentamt / European Patent Office / Office européen des brevets**

(11) **EP 4 549 389 A1**

(12) **EUROPEAN PATENT APPLICATION**
published in accordance with Art. 153(4) EPC

(43) Date of publication:
07.05.2025 Bulletin 2025/19

(21) Application number: 23831182.3

(22) Date of filing: 19.06.2023

(51) International Patent Classification (IPC):
*C01F 5/02* (2006.01)    *C08K 9/02* (2006.01)
*C08L 101/00* (2006.01)

(52) Cooperative Patent Classification (CPC):
C01F 5/02; C08K 9/02; C08L 101/00

(86) International application number:
PCT/JP2023/022603

(87) International publication number:
WO 2024/004736 (04.01.2024 Gazette 2024/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.06.2022 JP 2022103519

(71) Applicant: Denka Company Limited
Tokyo 103-8338 (JP)

(72) Inventors:
• TSUNEYOSHI, Toshihiko
Tokyo 103-8338 (JP)
• FUKAZAWA, Motoharu
Tokyo 103-8338 (JP)
• OKABE, Takuto
Tokyo 103-8338 (JP)

(74) Representative: Gulde & Partner
Patent- und Rechtsanwaltskanzlei mbB
Berliner Freiheit 2
10785 Berlin (DE)

(54) **MAGNESIUM OXIDE POWDER AND RESIN COMPOSITION WHICH USES SAME**

(57) Provided are a magnesium oxide powder that has excellent moisture resistance and is capable of achieving a low dielectric loss tangent also applicable to high-frequency-band devices, and a resin composition using the same.

A magnesium oxide powder (I) including a coated particle (X) in which a surface of a core particle (A) including magnesium oxide is coated with a coating layer (B) including $MgAl_2O_4$, wherein the ratio of $MgAl_2O_4$ to the total mass of the magnesium oxide powder (I) is less than 13% by mass and a BET specific surface area $(Si)$ of the magnesium oxide powder (I) is less than 2.3 $m^2/g$.

[Fig. 1]

50 μm

EP 4 549 389 A1

**Description**

**TECHNICAL FIELD**

The present invention relates to a magnesium oxide powder and a resin composition which uses the same.

**BACKGROUND**

In fields such as semiconductor sealing materials, these materials are filled with inorganic metal oxide powders such as silica or alumina as fillers for the purpose of improving the coefficient of thermal expansion, thermal conductivity, flame retardance, and the like. However, the thermal conductivity of silica is relatively low and although alumina has a higher thermal conductivity than silica, its hardness is also high, so there is the problem of the equipment in which silica is used readily wearing down. Thus, powders of magnesium oxide, which has a higher thermal conductivity than silica and alumina and furthermore has a lower hardness than alumina, have been considered as fillers usable in the abovementioned technical fields.

It is known that the moisture resistance of magnesium oxide powders is low and the powders react with moisture in the atmosphere and become magnesium hydroxide. Upon the generation of magnesium hydroxide, the thermal conductivity readily falls, so the surfaces of magnesium oxide powders are coated to improve moisture resistance. For example, Patent Documents 1 and 2 describe coating the surface of a magnesium oxide powder with a complex oxide that includes alumina or aluminum to improve the moisture resistance of the magnesium oxide powder.

Incidentally, accompanying increases in the amount of information communication in the communications field in recent years, the application of high-frequency-band signals in electronic equipment, communication equipment, etc. has become more widespread. Meanwhile, there has also been the problem of circuit signal transmission loss increasing due to the application of high-frequency-band signals to the abovementioned equipment. Therefore, with regard to fillers to be used in high-frequency-band devices, there is a demand for materials with a low dielectric loss tangent.

Patent Document 1: JP S63-248716 A

Patent Document 2: JP 4302690 B

**SUMMARY OF INVENTION**

Thus, the present invention addresses the problem of providing a magnesium oxide powder that has excellent moisture resistance and is capable of achieving a low dielectric loss tangent also applicable to high-frequency band devices, and a resin composition using the same.

As a result of diligent investigation, the present inventors found that a magnesium oxide powder capable of solving all of the problems discussed above is obtained by configuring a magnesium oxide powder including a coated particle in which the surface of a core particle including magnesium oxide has been coated with a layer including a certain amount of $MgAl_2O_4$, wherein the BET specific surface area of the magnesium oxide powder is less than 2.3 $m^2/g$, thereby completing the present invention.

That is, the present invention has the following embodiments.

[1] A magnesium oxide powder (I) including a coated particle (X) in which a surface of a core particle (A) including magnesium oxide is coated with a coating layer (B) including $MgAl_2O_4$, wherein the ratio of $MgAl_2O_4$ to the total mass of the magnesium oxide powder (I) is less than 13% by mass, and
a BET specific surface area (Si) of the magnesium oxide powder (I) is less than 2.3 $m^2/g$.

[2] The magnesium oxide powder (I) described in [1] having a ratio of periclase to the total mass of the magnesium oxide powder (I) of 80% by mass or greater.

[3] The magnesium oxide powder (I) described in [1] or [2] having an average circularity (ARi) of 0.75 or greater.

[4] The magnesium oxide powder (I) described in any of [1] to [3] having a post-testing magnesium hydroxide content of less than 50% by mass, the magnesium hydroxide content being measured under measurement conditions in which:

10 g (M1) of the magnesium oxide powder (I) is left standing for 168 hours in a test device at a temperature of 135°C and a humidity of 85 RH%, the mass (M2) of the magnesium oxide powder (I) after being left to stand is measured and the change in mass before and after being left to stand is substituted into formula (1) below to calculate the magnesium hydroxide content,

$$\{(M2-M1)/18.0\} \times (40.3/M1) \times 100 \ldots (1)$$

wherein M1 is the mass (g) of the magnesium oxide powder (I) before being left to stand and M2 is the mass (g) of the magnesium oxide powder (I) after being left to stand, and 18.0 and 40.3 are the molecular weights of $H_2O$ and MgO, respectively.

[5] The magnesium oxide powder (I) described in any of [1] to [4] having a viscosity of 2,000 Pa·s/25°C or less, the viscosity being measured under measurement conditions in which:
the viscosity of a resin composition consisting of 60% by volume of a bisphenol A-based liquid epoxy resin (epoxy equivalent: 184-194) and 40% by volume of the magnesium oxide powder (I) is measured using a rotating rheometer at a shear rate of 1.0/s, a circular plate shape (10 mm $\varnothing$), a sample thickness of 1 mm, and a temperature of 25±1°C.

[6] The magnesium oxide powder (I) described in any of [1] to [5] having a ratio of $MgAl_2O_4$ to the total mass of the magnesium oxide powder (I) of 0.1% by mass or greater.

[7] The magnesium oxide powder (I) described in any of [1] to [6] for resin filling.

[8] A resin composition including the magnesium oxide powder (I) described in any of [1] to [7] and at least one resin selected from a thermoplastic resin and a thermosetting resin.

[9] The resin composition described in [8] for a sealing material, TIM material, or substrate directed to a high-frequency-band device.

According to the present invention, it is possible to provide a magnesium oxide powder (I) that has excellent moisture resistance and is capable of achieving a low dielectric loss tangent also applicable to high-frequency band devices, and a resin composition including the same.

**BRIEF DESCRIPTION OF DRAWINGS**

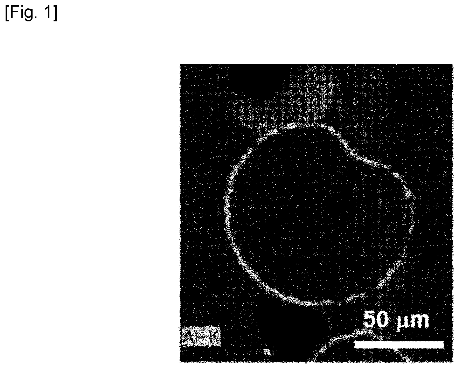

Fig. 1 is an example of an image where the aluminum component of the magnesium oxide powder (I) of the present invention has been mapped in a cross-sectional image using a field-emission scanning electron microscope (FE-SEM) and energy-dispersive X-ray spectroscopy (EDS).

**DESCRIPTION OF EMBODIMENTS**

An embodiment of the present invention shall be explained in detail below. The present invention is not limited to the following embodiment and can be implemented with modifications added, as appropriate, as long as the effects of the present invention are not inhibited. In cases where the specific explanation provided for one embodiment applies to another embodiment, the corresponding explanation for the other embodiment may be omitted. Herein, the expression "$\alpha$-$\beta$" indicating a numerical range means "$\alpha$ or greater and $\beta$ or less". Further, herein, "powder" means an "aggregation of particles".

[Magnesium Oxide Powder (I)]

The magnesium oxide powder according to the present embodiment is a magnesium oxide powder (I) including a coated particle (X) in which a surface of a core particle (A) including magnesium oxide has been coated with a coating layer (B) including $MgAl_2O_4$, characterized in that the ratio of $MgAl_2O_4$ to the total mass of the magnesium oxide powder (I) is less than 13% by mass and the BET specific surface area (Si) of the magnesium oxide powder (I) is less than 2.3 $m^2/g$. The magnesium oxide powder (I) according to the present embodiment (hereafter also described simply as "powder (I)") has excellent moisture resistance and is capable of achieving a low dielectric loss tangent also applicable to high-frequency-band devices. Further, the magnesium oxide powder (I) according to the present embodiment also has favorable thermal conductivity. The details of the magnesium oxide powder (I) according to the present embodiment shall be explained below.

<Coated Particle (X)>

The powder (I) according to the present embodiment includes a coated particle (X) in which a surface of a core particle (A) including magnesium oxide has been coated with a coating layer (B) including $MgAl_2O_4$. Due to the inclusion of such a coated particle (X), the moisture resistance of the powder (I) improves.

(Core Particle (A))

The core particle (A) is a particle including magnesium oxide as the primary component. "Including as the primary component" means including greater than 50% by mass of magnesium oxide with respect to all components constituting the core particle (100% by mass).

The core particle (A) may include components other than magnesium oxide. Examples of components other than magnesium oxide include an alkali component, boron, iron, etc. added during production of the magnesium oxide particles. When the powder (I) according to the present embodiment is used as, for example, a filler for a semiconductor sealing material, the ratio of magnesium oxide in the core particle (A) is preferably 90% by mass or greater and more preferably 95% by mass or greater with respect to all components constituting the core particle (100% by mass). Note that a particle including magnesium oxide at such a ratio can be obtained by methods such as, for example, electric melting methods and firing methods.

(Coating Layer (B))

The coated particle (X) included in the magnesium oxide powder (I) according to the present embodiment has a coating layer (B) including $MgAl_2O_4$. $MgAl_2O_4$ (hereafter also described as "spinel") is a complex oxide of magnesium and aluminum. Due to the inclusion of the coated particle (X) in which the surface of the core particle (A) has been coated with the coating layer (B) including spinel, the moisture resistance of the powder (I) improves.

The amount of spinel included in the powder (I) according to the present embodiment is less than 13% by mass and preferably 10% by mass or less with respect to the total mass of the powder (I). In one embodiment, the ratio of spinel in the powder (I) is preferably 0.1% by mass or greater and more preferably 1% by mass or greater. That is, the amount of spinel included in the powder (I) may be 0.1% by mass or greater and less than 13% by mass, may be 0.1-10% by mass, may be 1-10% by mass, or may be 2-10% by mass with respect to the total mass of the powder (I).

Coating the surface of a magnesium oxide particle with an inorganic metal oxide powder that includes spinel to improve the moisture resistance of the magnesium oxide powder has been conventionally performed (for example, Patent Documents 1 and 2 discussed above, etc.). The present inventors found that by keeping the amount of spinel included in the coating layer relatively low in the powder (I) including the coated particle (X) and furthermore, controlling the BET specific surface area (Si) of the powder (I) to be under a certain range, a powder (I) that not only has excellent moisture resistance, but is also capable of achieving a lower dielectric loss tangent, is obtained.

Note that whether or not the powder (I) according to the present embodiment includes the coated particle (X) can be confirmed by observing the powder (I) with a scanning electron microscope or the like. Further, the amount of spinel in the powder (I) can be confirmed by using an X-ray diffractometer to measure the X-ray diffraction pattern of the powder (I) or the like. For example, this can be measured with the following method.

<Method of Measuring the Amount of Spinel>

Using a sample horizontal-type multipurpose X-ray diffraction device (for example, product name: RINT-Ultima IV, manufactured by Rigaku Corporation) as a measurement device, the X-ray diffraction pattern of the powder (I) is measured with the following measurement conditions.

X-ray source: $CuK\alpha$

Tube voltage: 40 kV

Tube current: 40 mA

Scanning speed: 10.0°/min.

$2\theta$ scanning range: 10-80°

Further, quantitative analysis of the crystal phases is performed by Rietveld analysis of the obtained X-ray diffraction pattern. Specifically, Rietveld method software (for example, product name: Integrated powder X-ray software Jade+9.6, manufactured by MDI) is used. Note that an ICDD card (No: 01-075-1796) can be used in the calculation of the ratio (% by mass) of the spinel crystal phases.

In one embodiment, the coating layer (B) may include components other than spinel. Examples of components other than spinel include inorganic metal oxides or inorganic metal complex oxides (however, excluding spinel) including at least one element selected from titanium, aluminum, magnesium, silicon, and calcium. Specifically, examples include forsterite ($Mg_2SiO_4$), magnesium ferrite ($Fe_2MgO_4$), magnesium titanate ($MgTiO_3$), alumina ($Al_2O_3$), $MgO$-$Al_2O_3$ complex oxide, $SiO_2$, $MgO$-$SiO_2$ complex oxide, etc. The coating layer (B) may include one or more of these inorganic metal oxides or inorganic metal complex oxides. From the viewpoint of readily obtaining a powder (I) with more superior moisture resistance, the coating layer (B) may be constituted solely of spinel. Note that the ratios of components in the powder (I) other than spinel can also be calculated with a method that is the same as that for the measurement of the amount of spinel.

The coated particle (X) is a particle where a portion of the surface of the core particle (A) has been coated with the coating layer (B). From the viewpoint of readily achieving high moisture resistance and a low dielectric loss tangent, the coated particle (X) is preferably a core-shell particle wherein the entire surface of the core particle (A) has been coated with the coating layer (B). Note that "core-shell particle" refers to a coated particle where a majority of the surface of the core particle (A) has been coated. As for whether or not the coated particle (X) is a core-shell particle, when, for example, in a cross-sectional image of the coated particle (X) obtained by a field-emission scanning electron microscope (for example, product name: MERLIN FE-SEM manufactured by Carl Zeiss) and energy-dispersive X-ray spectroscopy (for example, product name: QUANTAX System XFlash 6/60 SDD, EDS manufactured by Bruker), the ratio of the cross-sectional perimeter length ra of the core particle (A) and the perimeter length rc of the portion coated by the coating layer (B) in the cross-section of the core particle (A) (rc/ra) is 0.6 or greater, it can be judged that the majority of the core particle (A) is coated by the coating layer (B) (that is, that the coated particle (X) is a core-shell particle).

In one embodiment, the ratio of the coated particle (X) in the powder (I) is preferably 80% or greater and more preferably 90% or greater. The powder (I) according to the present embodiment can include particles other than the coated particle (X) (other particles) in a range where physical properties of the powder (I) such as the amount of spinel and the BET specific surface area (Si) can be maintained. Examples of other particles include the uncoated core particle (A), particles of inorganic metal oxides or inorganic metal complex oxides (for example, alumina particles, silica particles, and spinel particles), etc. One of these may be included singly or two or more may be included. Note that the inorganic metal oxide or inorganic metal complex oxide particles may be particles added during production as a coating component of the core particle (A).

In one embodiment, the powder (I) may include only the coated particle (X). The ratio of the coated particle (X) in the powder (I) may be calculated according to, for example, what extent of coated particles (X) are present among 50 measured particles when the powder (I) has been observed with the method using a field-emission scanning electron microscope (FE-SEM) and energy dispersive X-ray spectroscopy (EDS) discussed above. For example, when 50 arbitrary particles in the area are observed, the ratio of the coated particle (X) in the powder (I) can be considered to be 100% when the 50 particles are all coated particles (X).

In one embodiment, the thickness of the coating layer (B) on the coated particle (X) may be 40 $\mu$m or less or may be 35 $\mu$m or less from the viewpoint of readily maintaining high thermal conductivity. From the viewpoint of readily obtaining a resin composition with lower viscosity and fluidity readily becoming favorable when a resin has been filled with the particles, the thickness may be 30 $\mu$m or less or may be 26 $\mu$m or less. Note that the thickness of the coating layer (B) may be a value calculated from the difference between the median diameter (Da50) of a raw material powder constituting the core particle (A) when producing the powder (I) according to the present embodiment and the median diameter (Di50) of the ultimately obtained powder (I) or may be a value measured with a scanning electron microscope.

Fig. 1 is an example of a photograph wherein the powder (I) according to the present embodiment was observed with a field-emission scanning electron microscope (FE-SEM) and energy dispersive X-ray spectroscopy (EDS). According to Fig. 1, it can be confirmed that the coated particle (X) is included in the powder (I). Further, it is understood that the thickness of the coating layer (B) is relatively homogeneous in the coated particle (X) included in the powder (I) according to the present embodiment. The BET specific surface area (Si) value is relatively low in a powder (I) including such a coated particle (X) and excellent moisture resistance and a low dielectric loss tangent are readily achieved thereby.

<BET Specific Surface Area (Si) of the Magnesium Oxide Powder (I)>

The BET specific surface area (Si) of the powder (I) according to the present embodiment is less than 2.3 $m^2$/g. If the BET specific surface area (Si) of the powder (I) is less than 2.3 $m^2$/g, excellent moisture resistance and a low dielectric loss tangent can be achieved. Note that the BET specific surface area (Si) can be measured with the following method.

(Method of Measuring BET Specific Surface Area (Si))

A measurement cell of a fully automated specific surface area measurement device (for example, product name: Macsorb HM model-1201 (BET single-point method) manufactured by MOUNTECH Co., Ltd.) is filled with 5 g of the magnesium oxide powder (I) and the specific surface area is measured. The degassification conditions prior to measurement can be set to 200°C and ten minutes. Further, helium and nitrogen (mixture concentration: 30.5%) can respectively be used as the carrier gas and the adsorption gas.

In one embodiment, from the viewpoint of readily achieving high moisture resistance and a low dielectric loss tangent, the BET specific surface area (Si) of the powder (I) may be 2.1 $m^2$/g or less or may be 1.9 $m^2$/g or less. Furthermore, from the viewpoint of fluidity readily becoming favorable when a resin is filled with the powder, the BET specific surface area (Si) may be 0.01-2.1 $m^2$/g or may be 0.05-1.9 $m^2$/g.

In one embodiment, the median diameter (Di50) of the powder (I) may be 5-300 $\mu$m, may be 5-200 $\mu$m, may be 5-150 $\mu$m, or may be 30-150 $\mu$m. If the median diameter (Di50) of the powder (I) is within these ranges, high moisture resistance and a low dielectric loss tangent are more readily both achieved. Note that herein, "median diameter (D50)" refers to an average particle diameter (D50) in which the cumulative value corresponds to 50% in a volume-based particle size distribution according to a laser diffraction/light scattering method. The cumulative particle size distribution is represented by a distribution curve with the particle diameter ($\mu$m) on the horizontal axis and the cumulative value (%) on the vertical axis.

In one embodiment, the average circularity (ARi) of the powder (I) may be 0.75 or greater, may be 0.80 or greater, may be 0.85 or greater, or may be 0.90 or greater. If the average circularity (ARi) of the powder (I) is 0.75 or greater, the powder (I) readily becomes that with a BET specific surface area (Si) less than 2.3 $m^2$/g. Further, the powder (I) also readily becomes that with a lower dielectric loss tangent. Note that the average circularity (ARi) of the powder (I) can be measured with the following method.

(Method of Measuring the Average Circularity (ARi))

After fixing the magnesium oxide powder (I) with a carbon tape, an osmium coating is applied. Thereafter, the particles constituting the powder (I) are photographed at a magnification of 500-50,000$\times$ using a scanning electron microscope (for example, product name: JSM-7001F SHL manufactured by JEOL Ltd.), a projected area ($A_p$) and a projected perimeter length (L) of the particles are calculated using an image analysis device (for example, product name: Image-Pro Premier Ver. 9.3 manufactured by Nippon Roper K.K.), and then the circularity is calculated according to the following formula (2). Circularities are calculated for 200 arbitrary particles and the average value thereof is used as the average circularity (ARi).

$$\text{Circularity} = 4\pi A_p/L^2 \ ... \ (2)$$

In one embodiment, the ratio of periclase (a crystal of magnesium oxide) with respect to the total mass of the powder (I) is preferably 80% by mass or greater, more preferably 85% by mass or greater, and still more preferably 87% by mass or greater. In one embodiment, the total amount of periclase and spinel in the powder (I) may be 100% by mass. If the ratio of periclase in the powder (I) is 80% by mass or greater, the ratio of components other than periclase and spinel in the powder (I) decreases and the powder (I) readily becomes that having more superior moisture resistance and a low dielectric loss tangent.

In one embodiment, the periclase crystallite diameter in the powder (I) is preferably $50\times10^{-9}$ m or greater. If the powder (I) is that with a crystallite diameter of $50\times10^{-9}$ m or greater, the thermal conductivity readily becomes favorable. Note that "crystallite diameter" refers to a value calculated with the Scherrer equation using an X-ray diffraction method. Note that when the particles in the powder are polycrystals, the crystallite diameter indicates the average value of the sizes of single crystals in the polycrystals.

In one embodiment, the average particle density of the powder (I) is preferably 0.1-7.0 g/$cm^3$ and more preferably 0.5-5.5 g/$cm^3$. If the average particle density is 0.1-7.0 g/$cm^3$, homogeneous dispersion in a resin is easy and thermal conductivity and dielectric properties readily become favorable. Note that the average particle density of the powder (I) can be measured with the following method.

(Method of Measuring the Average Particle Density)

2.0 g of the powder (I) is put in a sample cell for measurement and the average particle density is measured with a gas (helium) displacement method using a dry-type density meter (for example, product name: Accupic II 1340 manufactured by Shimadzu Corporation).

The powder (I) according to the present embodiment has excellent moisture resistance. In one embodiment, the magnesium hydroxide content measured with the following conditions is preferably less than 50% by mass, more preferably 30% by mass or less, and still more preferably 10% by mass or less. The powder (I) according to the present embodiment has excellent moisture resistance, so magnesium hydroxide is not readily generated.

(Post-testing Magnesium Hydroxide Content Measurement Conditions)

10 g (M1) of the magnesium oxide powder (I) is left to stand for 168 hours in a test device (for example, product name: Highly Accelerated Stress Test System EHS 212M manufactured by ESPEC CORP.; conditions: unsaturated mode) at a temperature of 135°C and a humidity of 85 RH%. The mass (M2) of the magnesium oxide powder (I) after being left to stand is measured and the change in mass before and after being left to stand is substituted into formula (1) below to calculate the magnesium hydroxide content.

$$\{(M2-M1)/18.0\} \times (40.3/M1) \times 100 \ \dots \ (1)$$

wherein M1 is the mass (g) of the magnesium oxide powder (I) before being left to stand and M2 is the mass (g) of the magnesium oxide powder (I) after being left to stand, and 18.0 and 40.3 are the molecular weights of $H_2O$ and MgO, respectively.

In one embodiment, the viscosity of the powder (I) measured with the following conditions is preferably 2,000 Pa·s/25°C or less, more preferably 1,000 Pa·s/25°C or less, and still more preferably 500 Pa·s/25°C or less. The BET specific surface area (Si) of the powder (I) according to the present embodiment is less than 2.3 $m^2$/g and the powder (I) includes particles with a relatively favorable surface smoothness. Therefore, fluidity also readily becomes favorable when a resin has been filled with the powder (I) according to the present embodiment.

(Viscosity Measurement Conditions)

The viscosity of a resin composition consisting of 60% by volume of a bisphenol A-based liquid epoxy resin (epoxy equivalent: 184-194, for example, product name: jER 828 manufactured by Mitsubishi Chemical Corporation) and 40% by volume of the powder (I) is measured using a rotating rheometer at a shear rate of 1.0/s, a circular plate shape (10 mm ⌀), a sample thickness of 1 mm, and a temperature of 25±1°C.

In one embodiment, from the viewpoint of making the resin-filling properties and the fluidity more favorable, the powder (I) may be surface treated with a surface treatment agent. Further, polar functional groups, etc. on the surface of the particles constituting the powder become more readily reduced and a lower dielectric loss tangent is more readily achieved. Examples of the surface treatment agent include silane coupling agents, aluminate coupling agents, etc. These may be used singly or in a combination of two or more. Among these, from the perspective of readily reducing polar functional groups, etc. on the particle surface, the powder (I) is preferably treated with a silane coupling agent, and silazanes such as hexamethyldisilazane (HMDS) and a silane coupling agent having a vinyl group such as vinyltrimethoxysilane are more preferred. Note that the presence or absence of surface treatment of the powder (I) can be confirmed by analyzing the powder using, for example, IR, TG-DTA, a mass spectrometry method, etc.

In one embodiment, the thermal conductivity of the powder (I) measured with the following conditions may be 4.0-8.0 W/mK or may be 5.0-7.0 W/mK. The powder (I) according to the present embodiment has excellent moisture resistance and can achieve a low dielectric loss tangent, but high thermal conductivity is also readily maintained.

(Thermal Conductivity Measurement Conditions)

The magnesium oxide powder (I) and a spherical alumina powder (for example, product name: DAW-07, product name: ASFP-40, or the like manufactured by Denka Company Limited) are mixed at a volume ratio of 51:49 to make a mixed powder. A silicone resin (for example, product name: SE1885:A, product name SE1885:B, or the like manufactured by Shin-Etsu Chemical Co., Ltd.) is filled with the mixed powder such that the ratio of the mixed powder is 77.5% by volume to make a sheet for evaluation. The sheet for evaluation is measured with a thermal resistance measurement device (for example, product name: TRM-046RHHT manufactured by Hitachi Technologies and Services, Ltd.) and the thermal conductivity is determined.

In one embodiment, the dielectric loss tangent at 36 GHz of a resin sheet including the powder (I) (a sheet consisting of a polyethylene resin and the powder (I); the ratio of the powder (I) in the resin sheet is 20% by volume) measured with the conditions discussed below is preferably $4.0 \times 10^{-4}$ or less, more preferably $3.5 \times 10^{-4}$ or less, and still more preferably $3.0 \times 10^{-4}$ or less. Note that "dielectric loss tangent" refers to the filler-substituted dielectric loss tangent ($\tan\delta_f$) calculated from formula (3) below.

$$[0035] \quad \tan\delta_c = V_f \cdot \tan\delta_f + (1 - V_f) \cdot \tan\delta_r \ldots (3)$$

wherein $V_f$ represents the filler content (% by mass), $\tan\delta_c$ represents the dielectric loss tangent of the resin sheet, and $\tan\delta_r$ represents the dielectric loss tangent of the polyethylene resin (PE).

As above, the powder (I) according to the present embodiment has excellent moisture resistance and is capable of achieving a low dielectric loss tangent also applicable to high-frequency-band devices. The reasons that a low dielectric loss tangent can be achieved with the powder (I) according to the present embodiment are thought to be that the total amount of polar functional groups was able to be reduced by lowering the particle surface area and the amount of OH groups on the surface or surface-adsorbed water was able to be reduced due to the introduction of a spinel layer.

[Magnesium Oxide Powder (I) Production Method]

The magnesium oxide powder according to the present embodiment can be produced by, for example, a method including coating a raw material powder that includes magnesium oxide with a coating component that includes aluminum and then firing (step (1)). One embodiment of the production method for the powder (I) including step (1) shall be explained below.

<Step (1)>

In the production method according to the present embodiment, step (1) is coating a raw material powder that includes magnesium oxide with a coating component that includes aluminum and then firing. Here, the "raw material powder" is the core particle (A) including magnesium oxide as the primary component discussed above.

(Raw Material Powder)

In one embodiment, the median diameter (Da50) of the raw material powder is preferably 10-150 $\mu$m. The median diameter (Da50) may be 15-150 $\mu$m, may be 20-140 $\mu$m, or may be 40-130 $\mu$m. If the median diameter (Da50) of the raw material powder is within these ranges, a magnesium oxide powder having a low dielectric loss tangent is readily obtained.

In one embodiment, the average circularity (ARa) of the raw material powder may be 0.70 or greater, may be 0.80 or greater, or may be 0.90 or greater from the viewpoint of readily improving resin-filling properties. Note that the average circularity (ARa) of the raw material powder can be measured with the same method as that for the average circularity (ARi) of the powder (I) discussed previously. In one embodiment, the average circularity (ARi) of the powder (I) with respect to the average circularity (ARa) of the raw material powder ((ARi)/(ARa)) may be 1.0 or greater or may be 1.05 or greater. If (ARi)/(ARa) is 1.0 or greater, the coating layer is readily formed homogeneously. As a result thereof, the surface irregularities of the particles constituting the powder (I) are readily reduced and the BET specific surface area (Si) readily becomes less than 2.3 m$^2$/g.

In one embodiment, the BET specific surface area (Sa) of the raw material powder may be 0.01-20 m$^2$/g, may be 0.01-10 m$^2$/g, or may be 0.01-1 m$^2$/g from the viewpoint of a powder (I) with a BET specific surface area (Si) of less than 2.3 m$^2$/g being readily obtained. The BET specific surface area (Sa) of the raw material powder can also be measured with the same method as for the powder (I). In one embodiment, the BET specific surface area (Si) of the powder (I) with respect to the BET specific surface area (Sa) of the raw material powder ((Si)/(Sa)) may be 5.0 or less. If (Si)/(Sa) is 5.0 or less, fluidity and filling properties more readily become favorable when a resin is filled with the obtained powder (I).

The method of preparing the raw material powder is not particularly limited. For example, the raw material powder may be prepared with a method such as firing of a magnesium hydroxide powder.

From the viewpoints of dielectric loss tangent reduction and electronic material reliability, the raw material powder preferably has a low content of impurities like alkali metal elements such as Li, Na, and K or metal elements such as Fe, and anions such as Cl$^-$ and Br$^-$. Specifically, the total amount of these impurities and anions in the raw material powder is preferably 0.01% by mass or less.

(Coating Method)

In the production method according to the present embodiment, the method for coating the raw material powder is not particularly limited and, for example, a shaking mixer, a flame-fusion method, tumbling fluidized bed coating, or the like can be employed. Among these, coating the raw material powder with tumbling fluidized bed coating is preferred from the viewpoint of the **BET** specific surface area of the obtained powder (I) readily being adjusted to less than 2.3 m$^2$/g.

(Tumbling Fluidized Bed Coating)

In one embodiment, step (1) can include spraying a slurry containing a coating component including aluminum onto the raw material powder to perform tumbling fluidized bed coating. Note that tumbling fluidized bed coating is also called tumbling fluidized coating, tumbling fluidized granulation coating, and the like and is a coating technique using a coating device wherein a lower portion of a typical fluidized bed device is equipped with a blade rotor. In one embodiment, including an inorganic metal oxide powder (B1) that includes alumina powder as the coating component including aluminum is preferable. The inorganic metal oxide powder (B1) may include other powders beyond alumina powder and may include, for example, silica powder or the like. In a preferred embodiment, the median diameter $(Db_150)$ of the inorganic metal oxide powder (B1) with respect to the median diameter (Da50) of the raw material powder $((Db_150)/(Da50))$ may be $8.0 \times 10^{-6}$ to $1.0 \times 10^{-1}$ or may be $5.0 \times 10^{-5}$ to $5.0 \times 10^{-2}$. If $(Db_150)/(Da50)$ is within these ranges, the surface of the raw material powder is readily more effectively coated.

In one embodiment, the ratio of the coating component including aluminum in the slurry may be 0.1-80% by mass or may be 1-50% by mass with respect to the total mass of the slurry from the viewpoint of readily adjusting the amount of spinel included in the obtained powder (I) to less than 13% by mass.

In one embodiment, including water or ethanol is preferred and including water is more preferred as a dispersion medium included in the slurry. Further, components other than the coating component and the dispersion medium may be included in the slurry. Examples of other components include dispersing agents, binders, etc. These other components may be used singly or as a combination of two or more.

In one embodiment, the amount of the sprayed coating component including aluminum with respect to the raw material powder is preferably 1-25% by mass with respect to the total amount of the raw material powder and the coating component including aluminum (100% by mass) from the viewpoints of readily adjusting the amount of spinel included in the obtained powder (I) to less than 13% by mass and readily adjusting the BET specific surface area (Si) to less than 2.3 $m^2$/g. That is, when coating the raw material powder with tumbling fluidized bed coating, spraying the raw material powder with the slurry may be performed so the ratio of the coating component including aluminum with respect to the total amount of the raw material powder and the coating component including aluminum (100% by mass) is in the range of 1-25% by mass. In other embodiments, the amount of the sprayed coating component may be 1% by mass or greater and less than 25% by mass, may be 1-20% by mass, may be 1% by mass or greater and less than 20% by mass, or may be 1-18% by mass with respect to the total amount.

In one embodiment, the tumbling fluidized bed coating may be performed under a condition of 20-150°C, may be performed under a condition of 30-100°C, or may be performed under a condition of 50-90°C. Further, the coating time is not particularly limited so long as it is a time in which the surface of the raw material powder is sufficiently coated. From the viewpoint of readily forming a homogeneous coating layer (B), the time may be 0.01-24 hours, may be 0.05-24 hours, or may be 0.1-12 hours.

Tumbling fluidized bed coating can be performed using a conventionally known tumbling fluidized bed device. For example, product name: Tumbling Fluidized Bed Granulating-Coating Machine MP (Multiplex) manufactured by Powrex Corporation or the like may be used.

<Firing>

In the production method according to the present embodiment, step (1) includes coating the raw material powder and then firing. From the viewpoint of readily forming a homogeneous coating layer (B), 500-1,600°C is preferred, 700-1,600°C is more preferred, 1,000-1,600°C is still more preferred, and 1,000-1,400°C is especially preferred as the firing temperature. In one embodiment, the temperature may be greater than 1,000°C and 1,600°C or less. Further, from the viewpoint of readily forming a homogeneous coating layer (B), 0.5-10 hours is preferred and 1-8 hours is more preferred as the firing time.

<Other Steps>

After step (1), the obtained powder (I) may be an aggregate. As such, a crushing treatment may be performed as needed. The crushing method is preferably performed with conditions where the BET specific surface area (Si) of the powder (I) does not readily change, and for example, a mortar, a bead mill, a ball mill, or the like can be employed.

Further, a step for surface treating the obtained powder (I) with a surface treatment agent, a washing step for reducing impurities in the powder (I) (for example, the anions discussed above and the like), etc., may also be included.

In one embodiment, after the raw material powder is fired, the obtained powder (I) may be classified by a sieving method, an air-flow classification method, etc. The median diameter (Di50), the BET specific surface area (Si), etc. of the powder (I) is readily controlled to a suitable range by classifying the powder (I).

[Use]

The powder (I) according to the present embodiment has excellent moisture resistance and furthermore is capable of achieving a low dielectric loss tangent also applicable to high-frequency-band devices when a resin has been filled therewith. Therefore, the powder (I) according to the present embodiment can be suitably used as a filler material for resins, particularly as a filler material for resin compositions to be applied to a sealing material, TIM material, or substrate directed to a high-frequency-band device. Other embodiments of the powder (I) are uses as an inorganic filler for a sealing material, TIM material, or substrate directed to a high-frequency-band device or methods of use thereof. Here, the "high-frequency-band device" may be a mobile phone or automobile component which uses high-frequency band radio waves.

[Resin Composition]

The resin composition according to the present embodiment includes the magnesium oxide powder (I) discussed above and at least one resin selected from a thermoplastic resin and a thermosetting resin.

The content of the powder (I) in the resin composition is not particularly limited and can be adjusted, as appropriate, according to objectives. Note that because the fluidity of the powder (I) according to the present embodiment is also favorable when a resin has been filled therewith, the amount of the powder blended in the resin composition can optionally be adjusted such that desired dielectric properties are obtained. For example, when used in a high-frequency-band substrate material or an insulating material use, the powder (I) may be blended in the range of 1-99% by mass and more preferably in the range of 10-90% by mass with respect to the total mass of the resin composition.

<Resin>

The resin composition according to the present embodiment includes at least one resin selected from a thermoplastic resin and a thermosetting resin. More specifically, examples of the resin include: polyethylene resins; polypropylene resins; epoxy resins; silicone resins; phenol resins; melamine resins; urea resins; unsaturated polyester resins; fluororesins; polyamide-based resins such as polyimide resins, polyamide imide resins, and polyether imide resins; polyester-based resins such as polybutylene terephthalate resins and polyethylene terephthalate resins; polyphenylene sulfide resins; wholly aromatic polyester resins; polysulfone resins; liquid-crystal polymer resins; polyether sulfone resins; polycarbonate resins; maleimide-modified resins; ABS resins; AAS (acrylonitrile-acrylic rubber-styrene) resins; AES (acrylonitrile-ethylenepropylene-diene rubber-styrene) resins; hydrocarbon-based elastomer resins; polyphenylene ether resins; aromatic polyene-based resins; and the like. These may be used singly or in a combination of two or more.

A curing agent, a curing promoter, a mold release agent, a coupling agent, a colorant, a flame retardant, an ion scavenger, etc. may be blended into the resin composition according to the present embodiment so long as the effects of the present invention are not inhibited.

<Resin Composition Production Method>

The production method for the resin composition is not particularly limited and the resin composition can be produced, for example, by stirring, dissolving, mixing, or dispersing predetermined amounts of each material. The devices for mixing, stirring, dispersing, etc. these mixtures are not particularly limited and a grinding machine, a three-roll mill, a ball mill, a planetary mixer, or the like provided with devices for stirring and heating can be used. Further, these devices may be used in combination, as appropriate.

As discussed above, the resin composition including the magnesium oxide powder according to the present embodiment has excellent moisture resistance and can achieve a low dielectric loss tangent. Further, the resin composition including the magnesium oxide powder according to the present embodiment has low viscosity and therefore, processability and workability are also excellent.

**EXAMPLES**

The present invention shall be explained in detail below by presenting examples, but the present invention is not limited by the following descriptions.

[Example 1]

A magnesium oxide powder (product name: DMG-50 manufactured by Denka Company Limited, median diameter (Da50): 50 $\mu$m, BET specific surface area (Sa): 0.2 m$^2$/g, average circularity (ARa): 0.93) was used as the raw material powder and a slurry including an alumina powder (product name: CAB-O-SPERSE PG008 manufactured by Cabot Specialty Chemicals, Inc., median diameter (Db$_i$50): 100 nm) was sprayed onto the raw material powder as the coating component to perform tumbling fluidized bed coating. The magnesium oxide powder was sprayed with the slurry at an amount such that the ratio of the coating component with respect to the total amount of the magnesium oxide powder and the coating component (100% by mass) became 5% by mass (magnesium oxide powder: 95% by mass and coating component: 5% by mass (alumina powder conversion)). Thereafter, the powder was fired for one hour at 1,000°C to obtain the magnesium oxide powder (I). The amount of spinel, the amount of periclase, the BET specific surface area (Si), the presence or absence of the coated particle (X), the median diameter (Di50), and the average circularity (ARi) of the obtained magnesium oxide powder (I) were measured with the following conditions. Note that the physical property values of the raw material powder and the alumina powder are also values measured with the following conditions. The results are shown in Table 1.

<Method of Measuring the Amount of Spinel in the Powder (I)>

The X-ray diffraction pattern of the powder (I) was measured with the following measurement conditions using a sample horizontal-type multipurpose X-ray diffraction device (product name: RINT-Ultima IV, manufactured by Rigaku Corporation) as a measurement device.

X-ray source: CuK$\alpha$

Tube voltage: 40 kV

Tube current: 40 mA

Scanning speed: 10.0°/min.

2$\theta$ scanning range: 10°-80°

Further, quantitative analysis of the crystal phases was performed by Rietveld analysis of the obtained X-ray diffraction pattern. Specifically, the analysis was performed using Rietveld method software (product name: Integrated powder X-ray software Jade+9.6, manufactured by MDI). Note that an ICDD card (No: 01-075-1796) was used in the calculation of the ratio (% by mass) of the spinel crystal phases.

<Method of Measuring the Amount of Periclase in the Powder (I)>

The X-ray diffraction pattern of the powder (I) was measured with the following measurement conditions using a sample horizontal-type multipurpose X-ray diffraction device (product name: RINT-Ultima IV, manufactured by Rigaku Corporation) as a measurement device.

X-ray source: CuK$\alpha$

Tube voltage: 40 kV

Tube current: 40 mA

Scanning speed: 10.0°/min.

2$\theta$ scanning range: 10°-80°

Further, quantitative analysis of the crystal phases was performed by Rietveld analysis of the obtained X-ray diffraction pattern. Specifically, the analysis was performed using Rietveld method software (product name: Integrated powder X-ray software Jade+9.6, manufactured by MDI). Note that an ICDD card (No: 00-045-0946) was used in the calculation of the ratio (% by mass) of the periclase crystal phases.

<Method of Measuring the BET Specific Surface Area (Si) of the Powder (I)>

A measurement cell of a fully automated specific surface area measurement device (BET single-point method) (product name: Macsorb HM model-1201 fully automated specific surface area measuring device manufactured by MOUNTECH Co., Ltd.) was filled with 5 g of the powder (I) and the specific surface area was measured. The degassification conditions prior to measurement were set to 200°C and ten minutes. Further, helium and nitrogen (mixture concentration: 30.5%) were respectively used as the carrier gas and the adsorption gas.

<Presence or Absence of the Coated Particle (X) and Core-shell Particle>

The powder (I) was observed with a scanning electron microscope (product name: JSM-7001F manufactured by JEOL Ltd.) to confirm the presence or absence of the coated particle (X). Further, in a cross-sectional image of the powder (I) obtained by a field-emission scanning electron microscope (product name: MERLIN FE-SEM manufactured by Carl Zeiss) and energy-dispersive X-ray spectroscopy (product name: QUANTAX System XFlash 6/60 SDD, EDS manufactured by Bruker), the value of the ratio of the cross-sectional perimeter length ra of the coated particle and the perimeter length rc of the portion coated by the coating layer (B) in the cross-section of the coated particle (rc/ra) was calculated and the presence or absence of the core-shell particle was confirmed. At this time, the measurement was performed with an image acquisition magnification of $1,000\times$, an applied voltage of 10 kV, a current amount of 500 nA, and a measurement time of 30 seconds, and element mapping of aluminum and magnesium was performed. Further, image analysis was performed using ImageJ, in an image of one particle, the perimeter length of the magnesium component-mapped portion which serves as the core portion was made ra and the perimeter length of the portion of the perimeter length of the magnesium component that is in contact with the aluminum portion which serves as the shell portion (the component is deemed to be "in contact" if just one outside pixel of the perimeter portion of the magnesium is the mapped portion of the aluminum component) was made rc, rc/ra was calculated, and particles where rc/ra is 0.6 or greater were deemed to be core-shell particles. The results are shown in Table 1.

<Method of Measuring the Median Diameter (Di50) of the Powder (I)>

The median diameter (D50) of each material was determined by volume-based particle distribution measurement with a laser diffraction particle size distribution measuring device (product name: LS 13 320 manufactured by Beckman Coulter, Inc.). Specifically, 50 cm$^3$ of pure water and 0.1 g of the raw material powder (or the powder (I)) were placed in a glass beaker and a dispersion treatment was performed with an output of 25 W for 60 seconds using an ultrasonic homogenizer (product name: Smurt NR-50M manufactured by Microtec Co., Ltd. (titanium alloy tip, $\varnothing$ 3 (NS-50M-MT3))). The dispersed solution of the raw material powder (or the powder (I)) on which the dispersion treatment was performed was added to the laser diffraction particle size distribution measuring device one drop at a time using a pipette, and measurement was performed 30 seconds after a predetermined amount had been added. Note that the index of refraction of water was set to 1.33 and the index of refraction of the powder (I) was set to 1.74. The median diameter (D50) was calculated from a particle diameter in which the cumulative value corresponds to 50% in a volume-based cumulative particle size distribution of the measured particle diameters.

<Method of Measuring the Average Circularity (ARi)>

After fixing the magnesium oxide powder (I) with a carbon tape, an osmium coating was applied. Thereafter, the particles constituting the powder (I) were photographed at a magnification of $500\text{-}50,000\times$ using a scanning electron microscope (product name: JSM-7001F SHL manufactured by JEOL Ltd.), a projected area ($A_p$) and a projected perimeter length (L) of the particles were calculated using an image analysis device (product name: Image-Pro Premier Ver. 9.3 manufactured by Nippon Roper K.K.), and then the circularity was calculated with the following formula (2). Circularities were calculated for 200 arbitrary particles and the average value thereof was used as the average circularity (ARi).

$$\text{Circularity} = 4\pi A_p/L^2 \dots (2)$$

Next, the moisture resistance and dielectric loss tangent of the obtained powder (I) were evaluated with the following conditions. Further, evaluation of the thermal conductivity and fluidity was also performed. The results are shown in Table 1.

<Moisture Resistance Evaluation>

Moisture resistance testing on the powder (I) was performed with the following conditions and the post-testing magnesium hydroxide content was measured. Further, evaluation was conducted according to the following evaluation criteria.

10 g (M1) of the magnesium oxide powder (I) was left to stand for 168 hours in a test device (product name: Highly Accelerated Stress Test System EHS 212M manufactured by ESPEC CORP.; conditions: unsaturated mode) at a temperature of 135°C and a humidity of 85 RH%. The mass (M2) of the magnesium oxide powder (I) after being left to stand was measured and the change in mass before and after being left to stand was substituted into formula (1) below to calculate the magnesium hydroxide content.

$$\{(M2-M1)/18.0\} \times (40.3/M1) \times 100 \ldots (1)$$

wherein M1 is the mass (g) of the magnesium oxide powder (I) before being left to stand and M2 is the mass (g) of the magnesium oxide powder (I) after being left to stand, and 18.0 and 40.3 are the molecular weights of $H_2O$ and MgO, respectively.

(Evaluation Criteria)

Excellent: The rate of conversion into magnesium hydroxide is less 10% by mass.

Good: The rate of conversion into magnesium hydroxide is 10% by mass or greater and less than 30% by mass.

Pass: The rate of conversion into magnesium hydroxide is 30% by mass or greater and less than 50% by mass.

Fail: The rate of conversion into magnesium hydroxide is 50% by mass or greater.

<Evaluation of the Dielectric Loss Tangent>

The powder (I) and a polyethylene resin powder (product name: FLO-THENE® UF-20S manufactured by Sumitomo Seika Chemicals co., Ltd.) were weighed so that the filling content of the powder (I) was 20% by volume and mixed using an oscillation mixer (manufactured by Resodyn Corporation) with an acceleration rate of 60G and a processing time of two minutes to obtain a resin composition. The obtained resin composition was fed into a metal frame with a diameter of 3 cm at an amount such that the thickness thereof became approximately 0.3 mm, and was rendered into a sheet by a nanoimprinting device (product name: X-300 manufactured by SCIVAX Corporation) with the conditions of 30,000 N and 140°C for five minutes. The obtained sheet was cut into 1.5 cm × 1.5 cm sizes to obtain evaluation samples.

Next, a 36 GHz cavity resonator (manufactured by Samtech. Co., Ltd.) was connected to a vector network analyzer (product name: 85107, manufactured by Keysight Technologies), an evaluation sample was arranged so as to cover a 10 mm-diameter hole provided in the cavity resonator, and a resonance frequency (f0) and an unloaded Q value (Qu) were measured. After each measurement, the evaluation sample was rotated 60 degrees, and the same measurement was repeated five times. Average values of the obtained f0 and Qu values were used as measurement values, and analytical software (software manufactured by SAMTECH Co., Ltd.) was used to calculate the dielectric loss tangent ($\tan\delta_f$) according to formula (3) below. Note that the measurements were carried out with conditions of a measurement temperature of 20°C and a humidity of 60% RH. The obtained dielectric loss tangent values were evaluated using the evaluation criteria below.

$$\tan\delta_c = V_f \cdot \tan\delta_f + (1-V_f) \cdot \tan\delta_r \ldots (3)$$

wherein $V_f$ represents the filler content (% by mass), $\tan\delta_c$ represents the dielectric loss tangent of the resin sheet, and $\tan\delta_r$ represents the dielectric loss tangent of the polyethylene resin (PE).

(Evaluation Criteria)

Excellent: The dielectric loss tangent is $3.0 \times 10^{-4}$ or less.

Good: The dielectric loss tangent is greater than $3.0 \times 10^{-4}$ and $3.5 \times 10^{-4}$ or less.

Pass: The dielectric loss tangent is greater than $3.5 \times 10^{-4}$ and $4.0 \times 10^{-4}$ or less.

Fail: The dielectric loss tangent is greater than $4.0 \times 10^{-4}$.

<Thermal Conductivity Evaluation>

The magnesium oxide powder and a spherical alumina powder (a mixture of product name: DAW-07 and product name: ASFP-40 manufactured by Denka Company Limited; (DAW-07)/(ASFP-40) = 70/30 (volume ratio)) were mixed at a volume ratio of 51:49 to make a mixed powder. A silicone resin (a mixture of product name: SE1885:A and product name SE1885:B manufactured by Shin-Etsu Chemical Co., Ltd.; (SE1885:A)/(SE1885:B) = 50/50 (volume ratio)) was filled with the mixed powder such that the ratio of the mixed powder became 77.5% by volume and mixed with a mixer equipped with stirring blades to obtain a resin composition. The resin composition was molded using a sheet coater to obtain a 3 mm-thick sheet for evaluation. The sheet for evaluation was measured with a thermal resistance measurement device (product name: TRM-046RHHT manufactured by Hitachi Technologies and Services, Ltd.) to determine the thermal conductivity. Note that measurement was performed with the conditions of a fixed load mode and a set load of 2 N. Further, evaluation was performed in accordance with the following evaluation criteria, and an evaluation of B or higher was considered to be a pass.

(Evaluation Criteria)

Excellent: The thermal conductivity is greater than 6.0 W/mK.

Good: The thermal conductivity is greater than 4.0 W/mK and 6.0 W/mK or less.

Fail: The thermal conductivity is 4.0 W/mK or less.

<Fluidity Evaluation>

60% by volume of a bisphenol A-based liquid epoxy resin (epoxy equivalent: 184-194, product name: jER828 manufactured by Mitsubishi Chemical Corporation) and 40% by volume of the powder (I) were mixed and kneaded in a planetary mixer (product name: Awatori Rentaro® AR-250 manufactured by THINKY CORPORATION, number of rotations: 2,000 rpm) to prepare a resin composition. Next, the viscosity of the obtained resin composition at 25°C was measured with the following conditions using a rotating rheometer (product name: MCR-302 manufactured by Anton Paar Japan K.K.).

Plate shape: Circular plate 10 mm ∅

Sample thickness: 1 mm

Temperature: 25±1°C

Shear rate: 1.0/s

The obtained shear viscosity was evaluated in accordance with the following evaluation criteria, and an evaluation of C or higher was considered to be a pass.

Excellent: The viscosity of the resin composition is 500 Pa·s/25°C or less.

Good: The viscosity of the resin composition is greater than 500 Pa·s/25°C and 1,000 Pa·s/25°C or less.

Pass: The viscosity of the resin composition is greater than 1,000 Pa·s/25°C and 2,000 Pa·s/25°C or less.

Fail: The viscosity of the resin composition is greater than 2,000 Pa·s/25°C.

[Examples 2-7 and Comparative Examples 1-3]

Other than the raw material powders and production conditions being as shown in Table 1, the powders (I) were prepared in the same manner as Example 1. The amount of spinel, the amount of periclase, the BET specific surface area, the presence or absence of the coated particle (X), the median diameter (Di50), and the average circularity (ARi) of the powders (I) of the examples were measured with the same conditions as for Example 1. Further, the moisture resistance, dielectric loss tangent, fluidity, and thermal conductivity were evaluated with the same conditions as for Example 1. The results are shown in Table 1.

Note that the raw materials used in the examples are as follows.

<Raw Material Powder (Core Particle (A))>

DMG50: Magnesium oxide powder (manufactured by Denka Company Limited, median diameter (Da50): 50 $\mu$m, BET specific surface area (Sa): 0.2 m$^2$/g, average circularity (ARa): 0.93)

DMG120: Magnesium oxide powder (manufactured by Denka Company Limited, median diameter (Da50): 120 $\mu$m, BET specific surface area (Sa): 0.1 m$^2$/g, average circularity (ARa): 0.94)

<Coating Component>

Al$_2$O$_3$ powder: Product name: PG008 manufactured by Cabot Specialty Chemicals, Inc., median diameter (Db$_1$50): 100 nm

Table 1

| TABLE 1 | | | | EXAMPLE 1 | EXAMPLE 2 | EXAMPLE 3 | EXAMPLE 4 | EXAMPLE 5 | EXAMPLE 6 | EXAMPLE 7 | COMPARATIVE EXAMPLE 1 | COMPARATIVE EXAMPLE 2 | COMPARATIVE EXAMPLE 3 |
|---|---|---|---|---|---|---|---|---|---|---|---|---|---|
| PRODUCTION CONDITIONS | RAW MATERIAL POWDER | MATERIAL | (-) | DMG50 | DMG50 | DMG50 | DMG50 | DMG120 | DMG120 | DMG120 | DMG50 | DMG50 | DMG120 |
| | | MEDIAN DIAMETER (Da50) | ($\mu$m) | 50 | 50 | 50 | 50 | 120 | 120 | 120 | 50 | 50 | 120 |
| | | AVERAGE CIRCULARITY (ARa) | (-) | 0.93 | 0.93 | 0.93 | 0.93 | 0.94 | 0.94 | 0.94 | 0.93 | 0.93 | 0.94 |
| | | BET SPECIFIC SURFACE AREA (Sa) | ($m^2$/g) | 0.20 | 0.20 | 0.20 | 0.20 | 0.10 | 0.10 | 0.10 | 0.20 | 0.20 | 0.10 |
| | COATING COMPONENT (INORGANIC METAL OXIDE POWDER (B1)) | | (-) | $Al_2O_3$ POWDER | | | | | | | $Al_2O_3$ POWDER | | |
| | FIRING TEMPERATURE | | (°C) | 1000 | 1000 | 1300 | 1500 | 1000 | 1300 | 1500 | 700 | 1500 | 700 |
| | FIRING TIME | | (hr) | 1 | 1 | 1 | 1 | 2 | 2 | | 8 | 1 | 8 |
| EVALUATION OF PHYSICAL PROPERTIES OF POWDER (I) | $MgAl_2O_4$ RATIO | | (MASS%) | 2 | 7 | 8 | 9 | 10 | 8 | 8 | 0 | 38 | 1 |
| | BET SPECIFIC SURFACE AREA (Si) | | ($m^2$/g) | 1.83 | 2.09 | 0.14 | 0.13 | 1.93 | 0.08 | 0.08 | 4.23 | 2.71 | 2.34 |
| | MEDIAN DIAMETER (Di50) | | ($\mu$m) | 52.3 | 53.3 | 54.1 | 54.8 | 130.4 | 132.1 | 146.1 | 53.7 | 73.7 | 125.1 |
| | PERICLASE RATIO | | (MASS%) | 98 | 93 | 92 | 91 | 90 | 92 | 92 | 94 | 62 | 95 |
| | AVERAGE CIRCULARITY (ARi) | | (-) | 0.91 | 0.92 | 0.92 | 0.94 | 0.91 | 0.92 | 0.93 | 0.89 | 0.92 | 0.92 |
| | PRESENCE OR ABSENCE OF COATED PARTICLE (X) | | (-) | PRESENT CORE-SHELL | PRESENT | PRESENT CORE-SHELL | PRESENT CORE-SHELL | PRESENT | PRESENT CORE-SHELL | PRESENT | PRESENT | PRESENT CORE-SHELL | PRESENT |

(continued)

| TABLE 1 | | | EXAMPLE 1 | EXAMPLE 2 | EXAMPLE 3 | EXAMPLE 4 | EXAMPLE 5 | EXAMPLE 6 | EXAMPLE 7 | COMPARATIVE EXAMPLE 1 | COMPARATIVE EXAMPLE 2 | COMPARATIVE EXAMPLE 3 |
|---|---|---|---|---|---|---|---|---|---|---|---|---|
| EVALUATION RESULTS | MAGNESIUM HYDROXIDE CONTENT | (MASS%) | 32.1 | 1.4 | 1.0 | 2.3 | 3.4 | 0.6 | 2.3 | 74.5 | 2.1 | 62.4 |
| | MOISTURE RESISTANCE EVALUATION | (-) | PASS | EXCELLENT | EXCELLENT | EXCELLENT | EXCELLENT | EXCELLENT | EXCELLENT | FAIL | EXCELLENT | FAIL |
| | DIELECTRIC LOSS FACTOR OF RESIN COMPOSITION | $(\times 10^{-4})$ | 2.8 | 2.7 | 2.2 | 2.5 | 2.7 | 2.6 | 2.0 | 6.7 | 4.2 | 5.6 |
| | EVALUATION OF DIELECTRIC LOSS TANGENT | (-) | EXCELLENT | EXCELLENT | EXCELLENT | EXCELLENT | EXCELLENT | EXCELLENT | EXCELLENT | FAIL | FAIL | FAIL |
| | RESIN COMPOSITION VISCOSITY (25°C) | (Pa·s) | 832 | 832 | 626 | 578 | 729 | 425 | 442 | 992 | 2430 | 828 |
| | FLUIDITY EVALUATION | (-) | GOOD | GOOD | GOOD | GOOD | GOOD | EXCELLENT | EXCELLENT | GOOD | FAIL | GOOD |
| | THERMAL CONDUCTIVITY OF RESIN COMPOSITION | (W/mK) | 6.5 | 6.2 | 6.2 | 6.4 | 6.4 | 6.6 | 6.6 | 6.1 | 5.1 | 6.4 |
| | EVALUATION OF THERMAL PROPERTIES | (-) | EXCELLENT | EXCELLENT | EXCELLENT | EXCELLENT | EXCELLENT | EXCELLENT | EXCELLENT | EXCELLENT | GOOD | EXCELLENT |

As shown in Table 1, the powders (I) of Examples 1-7 which satisfy the configuration of the present embodiment have excellent moisture resistance and were capable of achieving a low dielectric loss tangent. Furthermore, the fluidity and thermal conductivity were also favorable. Meanwhile, Comparative Example 1, wherein the amount of spinel in the powder (I) was 0% by mass and the BET specific surface area (Si) was 2.3 $m^2/g$ or greater, had poor moisture resistance and the dielectric loss tangent value was also high. Comparative Example 2, wherein the amount of spinel in the powder (I) was greater than 13% by mass and the BET specific surface area (Si) was 2.3 $m^2/g$ or greater, had favorable moisture resistance, but the dielectric loss tangent was high. Further, Comparative Example 3, wherein the BET specific surface area (Si) was 2.3 $m^2/g$ or greater, had poor moisture resistance and the dielectric loss tangent value was also high. Note that the dielectric loss tangent value was $6.7 \times 10^{-4}$ when the uncoated magnesium oxide powder that does not include the coated particle (X) was measured with the abovementioned method. The powders (I) of Examples 1-7 were able to achieve a lower dielectric loss tangent than uncoated magnesium oxide powder. According to the results above, the powder (I) according to the present embodiment was confirmed to have excellent moisture resistance and to be capable of achieving a low dielectric loss tangent. The dielectric loss tangent of the powder (I) according to the present embodiment was a value sufficiently applicable to fillers for high-frequency-band devices.

## INDUSTRIAL APPLICABILITY

The powder (I) according to the present embodiment has excellent moisture resistance and can achieve a low dielectric loss tangent when a resin has been filled therewith. Therefore, the powder (I) according to the present embodiment and a resin composition using the same are applicable as ceramic fillers for high-frequency-band devices.

## Claims

1. A magnesium oxide powder (I) comprising a coated particle (X) in which a surface of a core particle (A) comprising magnesium oxide is coated with a coating layer (B) comprising $MgAl_2O_4$,

   wherein the ratio of $MgAl_2O_4$ to the total mass of the magnesium oxide powder (I) is less than 13% by mass, and a BET specific surface area (Si) of the magnesium oxide powder (I) is less than 2.3 $m^2/g$.

2. The magnesium oxide powder (I) according to claim 1 having a ratio of periclase to the total mass of the magnesium oxide powder (I) of 80% by mass or greater.

3. The magnesium oxide powder (I) according to claim 1 or 2 having an average circularity (ARi) of 0.75 or greater.

4. The magnesium oxide powder (I) according to claim 1 or 2 having a post-testing magnesium hydroxide content of less than 50% by mass, the magnesium hydroxide content being measured under measurement conditions in which:

   10 g (M1) of the magnesium oxide powder (I) is left standing for 168 hours in a test device at a temperature of 135°C and a humidity of 85 RH%; the mass (M2) of the magnesium oxide powder (I) after being left to stand is measured and the change in mass before and after being left to stand is substituted into formula (1) below to calculate the magnesium hydroxide content,

   $$\{(M2-M1)/18.0\} \times (40.3/M1) \times 100 \ldots (1)$$

   wherein M1 is the mass (g) of the magnesium oxide powder (I) before being left to stand and M2 is the mass (g) of the magnesium oxide powder (I) after being left to stand, and 18.0 and 40.3 are the molecular weights of $H_2O$ and MgO, respectively.

5. The magnesium oxide powder (I) according to claim 1 or 2 having a viscosity of 2,000 Pa·s/25°C or less, the viscosity being measured under measurement conditions in which:
   the viscosity of a resin composition consisting of 60% by volume of a bisphenol A-based liquid epoxy resin (epoxy equivalent: 184-194) and 40% by volume of the magnesium oxide powder (I) is measured using a rotating rheometer at a shear rate of 1.0/s, a circular plate shape (10 mm $\varnothing$), a sample thickness of 1 mm, and a temperature of $25 \pm 1$°C.

6. The magnesium oxide powder (I) according to claim 1 or 2 having a ratio of $MgAl_2O_4$ to the total mass of the magnesium oxide powder (I) of 0.1% by mass or greater.

7. The magnesium oxide powder (I) according to claim 1 or 2 for use as resin filling.

8. A resin composition comprising the magnesium oxide powder (I) according to claim 1 or 2 and at least one resin selected from a thermoplastic resin and a thermosetting resin.

9. The resin composition according to claim 8 for a sealing material, TIM material, or substrate directed to a high-frequency-band device.

[Fig. 1]

50 μm

## INTERNATIONAL SEARCH REPORT

| International application No. |
|---|
| **PCT/JP2023/022603** |

**A.    CLASSIFICATION OF SUBJECT MATTER**

*C01F 5/02*(2006.01)i; *C08K 9/02*(2006.01)i; *C08L 101/00*(2006.01)i
FI:    C01F5/02; C08K9/02; C08L101/00

According to International Patent Classification (IPC) or to both national classification and IPC

**B.    FIELDS SEARCHED**

Minimum documentation searched (classification system followed by classification symbols)

C01F5/02; C08K9/02; C08L101/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)


**C.    DOCUMENTS CONSIDERED TO BE RELEVANT**

| Category* | Citation of document, with indication, where appropriate, of the relevant passages | Relevant to claim No. |
|---|---|---|
| A | JP 64-45716 A (ASAHI GLASS CO LTD) 20 February 1989 (1989-02-20)<br>claims 1-5, p. 2, lower right column, line 16 to p. 3, lower left column, line 17 | 1-9 |
| A | CN 103242042 A (SHANDONG UNIVERSITY) 14 August 2013 (2013-08-14)<br>claims 1-2, paragraphs [0014]-[0021], [0053]-[0059], fig. 1 | 1-9 |
| A | JP 2004-27177 A (TATEHO CHEM IND CO LTD) 29 January 2004 (2004-01-29)<br>claims 1-4, paragraphs [0013]-[0016], [0031]-[0032] | 1-9 |
| A | WO 2014/112334 A1 (TATEHO CHEM IND CO LTD) 24 July 2014 (2014-07-24)<br>entire text, all drawings | 1-9 |
| A | JP 2018-512361 A (ANADOLU UNIVERSITESI REKTORLUGU) 17 May 2018<br>(2018-05-17)<br>entire text, all drawings | 1-9 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 August 2023** | **22 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/022603**

| Patent document cited in search report | | | Publication date (day/month/year) | Patent family member(s) | | | Publication date (day/month/year) |
|---|---|---|---|---|---|---|---|
| JP | 64-45716 | A | 20 February 1989 | (Family: none) | | | |
| CN | 103242042 | A | 14 August 2013 | (Family: none) | | | |
| JP | 2004-27177 | A | 29 January 2004 | (Family: none) | | | |
| WO | 2014/112334 | A1 | 24 July 2014 | CN | 104903239 | A | |
| | | | | KR | 10-2015-0107797 | A | |
| JP | 2018-512361 | A | 17 May 2018 | US | 2018/0072582 | A1 | |
| | | | | entire text, all drawings | | | |
| | | | | WO | 2016/148664 | A1 | |
| | | | | EP | 3271310 | A1 | |
| | | | | CN | 107406330 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63248716 A
- JP 4302690 B